# EUROPÄISCHE PATENTSCHRIFT

(11) **EP 0 908 632 B1**
(45) Veröffentlichungstag und Bekanntmachung des Hinweises auf die Patenterteilung: **27.08.2003**
(21) Anmeldenummer: 98118446.8
(22) Anmeldetag: 30.09.1998
(51) Int. Cl.: F16B 11/00, B21J 15/02, B62D 29/00, F16B 5/04

(54) **Verfahren zum Verbinden von wenigstens zwei Fügepartnern**
Method of joining at least two elements
Méthode d'assemblage d'au moins deux éléments

(30) Priorität: 07.10.1997 DE 19744312
(43) Veröffentlichungstag der Anmeldung: 14.04.1999
(73) Patentinhaber: Volkswagen Aktiengesellschaft, 38436 Wolfsburg (DE)
(72) Erfinder: Widder, Thomas Dr., 38102 Braunschweig (DE)
(74) Vertreter: Fritz, Edmund Lothar, Dipl.-Chem.

(56) Entgegenhaltungen:
- EP-A- 0 623 758
- GB-A- 799 419
- JP-A- 56 034 579
- US-A- 5 030 488

## Beschreibung

Die vorliegende Erfindung betrifft ein Verfahren zum Verbinden von wenigstens zwei Fügepartnern, die durch ein Klebefügeverfahren miteinander verbunden werden, wobei die Oberfläche der beiden Fügepartner zumindest im Fügebereich aus einem Magnesiumwerkstoff besteht. Die Erfindung betrifft insbesondere Verbindungsverfahren dieser Art zur Anwendung im Fahrzeugbau, insbesondere im Kraftfahrzeug-Karosseriebau.

Fahrzeuge, insbesondere Karosserien von Kraftfahrzeugen sind bisher weit überwiegend aus Stahlwerkstoffen, insbesondere Stahlblechen hergestellt worden. Für Fügepartner aus Stahlwerkstoffen gibt es daher eine breit einsetzbare und gut erprobte Vielzahl von Fügeverfahren, insbesondere thermischen Fügeverfahren wie Schweißen etc.

In jüngerer Zeit werden im Fahrzeugbau, insbesondere im Kraftfahrzeug-Karosseriebau auch verstärkt andere Werkstoffe und Werkstoffkombinationen - wie Aluminium oder Kunststoffe - eingesetzt. Seit neuestem finden auch Magnesiumwerkstoffe - d. h. Magnesium bzw. Magnesiumlegierungen - verstärkte Anwendung im Fahrzeugbau.
Die EP 0 623 758 A2 beschreibt ein Verfahren zum Verbinden von wenigstens zwei Fügepartnern der eingangs genannten Art. Diese Druckschrift beschreibt insbesondere Klebeverbindungen für flächige Gegenstände, insbesondere für Bleche, Platten, Träger oder Profile aus Metall oder aus Kunststoff. Beispielsweise werden Metallbleche über ein Klebeband bzw. einen elastischen Klebstoff verbunden, wobei insbesondere Schmelzklebestoffe, Kautschuke oder dergleichen zur Anwendung kommen. Außer Kunststoffteilen werden Metallbleche miteinander verbunden, die aus Stahl, Eisen, verzinktem Eisen, Aluminium oder dessen Legierungen bestehen können. Diese Druckschrift gibt keine spezifische Lehre zur Schaffung von Verbindungen zwischen Fügepartnern, die aus Magnesiumwerkstoffen bestehen.

Die US 5 030 488 A beschreibt mehrschichtige nach Art von Laminaten aufgebaute Paneele für den Bau von Lkw-Karosserieteilen, die zwei äußere flächige Metallschichten umfassen, zwischen denen sich eine Polyesterharz-Kernschicht mit wesentlich größerer Materialstärke befindet. Es geht um die Schaffung von Strukturlaminaten mit hoher Festigkeit in den Außenschichten und vergleichsweise geringem Gewicht aufgrund der Kunststoffkernschicht. Es wird erwähnt, dass für die äußeren Metallschichten verschiedenste Metalle in Betracht kommen, wobei unter anderem auch Magnesium genannt ist. Diese Druckschrift enthält jedoch keine spezifische Lehre zur Schaffung von Klebefügeverbindungen von Fügepartnern, die aus Magnesiumwerkstoff bestehen.

Das japanische Patent Abstract JP-A-56 0 34 579 beschreibt eine Art Bördelverbindung zwischen zwei Fügepartnern unter Verwendung eines Klebebands, wobei durch Anwendung von elektrischem Strom das Klebeband geschmolzen wird. Die Druckschrift enthält keine Ausführungen bezüglich der Verbindung von Fügepartnern aus Magnesiumwerkstoffen.

Die GB-A-799 419 beschreibt ein Verfahren zum Verbinden von wenigstens zwei Fügepartnern, die durch ein Klebefügeverfahren miteinander verbunden werden, gemäß der eingangs genannten Gattung. Diese Druckschrift beschreibt ein Verfahren zum Verbinden kleiner Teile aus Magnesium, bei denen herkömmliche Schweißverfahren nicht zum Einsatz kommen können. Bei den Magnesiumteilen handelt es sich um Wellenleiter einer Mikrowellenvorrichtung. Zum Verbinden der beiden Fügepartner wird ein Zwischenstück aus Metallgaze verwendet, welches zunächst mit einem Klebstoff imprägniert wird. Die Metallgaze wird dabei in den Klebstoff eingebettet und danach erfolgt eine Wärmebehandlung, um den Klebstoff auszuhärten. Dieses bekannte Verfahren ist recht aufwendig, insbesondere, da das verwendete Zwischenstück aus Metallgaze zunächst im Umriss entsprechend der Fügefläche der beiden Fügepartner zurrechtgeschnitten werden muss. Für ein flächiges Fügen von Karosserieteilen im Kraftfahrzeugbau kommt das Verfahren daher nicht in Betracht.

Da für Fügepartner, deren Oberfläche zumindest im Fügebereich aus einem Magnesiumwerkstoff besteht, Fügeverfahren bisher kaum bekannt und nur wenig erprobt sind, besteht die Aufgabe, verbesserte Verfahren zum Verbinden von wenigstens zwei Fügepartnern, deren Oberfläche zumindest im Fügebereich aus einem Magnesiumwerkstoff besteht, vorzuschlagen.

Die vorgenannte Aufgabe wird durch ein Verbindungsverfahren gemäß Anspruch 1 gelöst. Weiterbildungen der Erfindung sind Gegenstand der Unteransprüche. Gegenstand der vorliegenden Erfindung ist außerdem ein Verbundbauteil aus zwei oder mehreren miteinander verbundenen Fügepartnern, die zumindest im Fügebereich eine Oberfläche aus einem Magnesiumwerkstoff aufweisen und durch ein Verbindungsverfahren der vorgenannten erfindungsgemäßen Art miteinander verbunden sind. Das kombinierte Umform- Klebe-Fügeverfahren gemäß Anspruch 1 umgeht die beträchtlichen Schwierigkeiten, die beim Schweißen von Fügepartnern, deren Oberfläche zumindest im Fügebereich aus einem Magnesiumwerkstoff besteht, auftreten. Dennoch gestattet es eine sichere, feste und langzeitstabile Verbindung herzustellen, die auch den hohen Anforderungen im Kraftfahrzeug-Karosseriebau genügt.

Als umformtechnische Fügeverfahren werden bevorzugt Durchsetzfügen (auch Druckfügen oder Clinchen genannt), Nieten sowie Verschrauben eingesetzt.

Als Nieten kommen insbesondere Stahlnieten sowie Nieten aus einem Aluminiumwerkstoff in Frage. Um beim Nieten Probleme durch Kontaktkorrosion zu vermeiden, ist auf die Auswahl des Materials der verwendeten Nieten besonderes Augenmerk zu richten. Bei Stahlnieten haben sich in Versuchen der Anmelderin zinkbeschichtete Stahlnieten bewährt. Bei Nieten aus einem Aluminiumwerkstoff sind Aluminiumlegierungen vorzuziehen, deren Gehalt an Kupfer, Eisen sowie anderen mit Magnesiumlegierungen kontaktkorrosionsfördernden Spurenelementen jeweils unter 1 % liegt. Grundsätzlich sind Aluminiumnieten Stahlnieten vorzuziehen, da sie leichter sind, weniger Kontaktkorrosion mit Magnesiumlegierungen zeigen und bei einem späteren Recycling des erfindungsgemäß hergestellten Verbundbauteils weniger störend bei der weiteren Verwendung des erhaltenen Magnesium-Recyclats wirken. Hinsichtlich der Festigkeit des Niets gegenüber mechanischen Beanspruchungen beim oder nach dem Nieten sind sie allerdings Stahlnieten unterlegen. Zur Verringerung bzw. Vermeidung von Spaltkorrosion können an allen Nieten- oder Schraubenarten Dichtmassen vorgesehen werden.

Als Nietformen kommen insbesondere Stanz-Vollniete und/oder Stanz-Halbhohlniete sowie Blindniete in Frage. Blindniete können auch bei nur einseitiger Zugänglichkeit der Fügezone eingesetzt werden, während Stanzniete eine zweiseitige Zugänglichkeit des Fügebereichs voraussetzen.

Die wenigstens zwei Fügepartner, deren Oberfläche zumindest im Fügebereich aus einem Magnesiumwerkstoff besteht, können auch vorteilhaft durch Verschrauben miteinander verbunden werden. Hier können insbesondere selbstschneidende Schrauben zum Einsatz kommen, die eine besonders rasche und wirtschaftliche Verarbeitung erlauben. Hinsichtlich der Materialauswahl der Schrauben gelten ähnliche Überlegungen, wie sie zuvor bezüglich. der Nieten dargelegt wurden.

Bei Versuchen der Anmelderin hat es sich besonders bewährt, umformtechnische Fügeverfahren wie Durchsetzfügen, Nieten und/oder Verschrauben mit einer zusätzlichen Verklebung der Fügebereiche der beiden Fügepartner zu kombinieren. Dabei hat es sich gezeigt, daß sich bei einem z. B. streifenförmigen, mit Klebemittel versehenen Fügebereich der beiden Magnesium-Fügepartner besonders feste Verbindungen ergeben, wenn die Durchsetzfügepunkte und/oder Nieten und/oder Schrauben nicht oder zumindest nicht ausschließlich in der Mitte der z. B. streifenförmigen Klebemittel-Auftragszone angeordnet sind, sondern längsseitig in den Randbereichen des z. B. streifenförmigen Klebemittel-Auftrags angeordnet sind.

Grundsätzlich können die wenigstens zwei Fügepartner, deren Oberfläche zumindest im Fügebereich aus einem Magnesiumwerkstoff besteht, aber auch durch reine Klebeverbindungen miteinander gefügt werden. Generell haben aber kombinierte Durchsetzfüge/Niet/Schraub/-Klebe-Verbindungen in Versuchen der Anmelderin die höchsten erreichten statischen und dynamischen Festigkeitswerte gezeigt.

Als Kleber kommen sowohl für reine Klebeverbindungen als auch für kombinierte Umform-Klebe-Verbindungen bevorzugt sowohl Kleber auf Polyurethan-Basis als auch Kleber auf Epoxidharz-Basis in Frage. Kleber auf Epoxidharz-Basis ermöglichen hochfeste Klebungen; sie werden daher bevorzugt z. B. für Strukturteile einer Kraftfahrzeugkarosserie verwendet, bei denen es auf hohe Festigkeit ankommt. Dies können z. B. Klebungen bei oder mit Karosseriesäulen oder -profilen sein.

Kleber auf Polyurethan-Basis ermöglichen hingegen elastische Klebungen auch bei größeren Fügespalten, da sie ein besseres Spaltfüllungsvermögen besitzen. Sie werden daher bevorzugt für Klebungen an der Karosserieaußenhaut eines Kraftfahrzeugs verwendet, z. B. am Karosseriedach. Daneben kommen beispielsweise auch Klebebänder für eine Klebefügung in Frage.

Generell hat es sich bewährt, die Fügepartner, deren Oberfläche zumindest im Fügebereich aus einem Magnesiumwerkstoff besteht, zumindest im Fügebereich vor dem Fügen einer Wärmevorbehandlung zu unterziehen. Die thermische Vorbehandlung geschieht typischerweise bei 150 bis 200 °C. Durch diese Wärmevorbehandlung werden insbesondere Risse und Sprünge beim Eindrücken bzw. Durchdringen des Magnesiummaterials durch das Durchsetzwerkzeug bzw. durch die Nieten bzw. durch die Schrauben vermindert oder ganz vermieden. Generell treten beim Nieten oder Schrauben Risse und Sprünge im Werkstoff in geringerem Ausmaß auf als beim Durchsetzfügen.

Insbesondere bei der Verwendung von Klebemitteln, und zwar sowohl bei reinen Klebeverbindungen als auch kombinierten Umform-Klebe-Verbindungen, hat es sich bewährt, die Fügepartner zumindest im Fügebereich einer Oberflächenvorbehandlung zu unterwerfen. Diese Oberflächenvorbehandlung kann dazu dienen, die Oberfläche zumindest im Fügebereich zu reinigen und so eine bessere Haftung des Klebemittels an den Fügepartnern im Fügebereich zu ermöglichen. Alternativ oder zusätzlich kann sie auch dazu dienen, haftvermittelnde Substanzen auf die Fügepartner zumindest im Fügebereich aufzubringen, um klebetechnisch günstige Bedingungen auf den Fügeflächen zu schaffen.

Bei den Versuchen der Anmelderin wurden verschiedene Oberflächenvorbehandlungsmethoden angewandt, die einzeln oder in Kombination miteinander verwendet werden können.

Generell empfiehlt sich eine Vorbehandlung zumindest der Fügeflächen mittels Lösungen von reinigungsaktiven Substanzen - z. B. Detergentien und/oder Tenside und/oder einem alkalischen Reinigungsbad - und/oder mittels organischer Lösungsmittel. Auf diese Weise können Fette, Öle, Schmutz, Staub und sonstige Oberflächenverschmutzungen, die eine optimale Benetzung der zu fügenden Oberflächen durch den Klebstoff behindern, verringert bzw. entfernt werden. Als organische Lösemittel haben sich bei Versuchen der Anmelderin insbesondere Aceton CH₃COCH₃ und/oder Methylethylketon CH₃COC₂H₅ bewährt. Die Reinigungswirkung der vorzugsweise wässrigen Lösung reinigungsaktiver Substanzen bzw. der organischen Lösemittel kann durch eine Ultraschallbehandlung noch wesentlich verbessert werden.

Alternativ oder zusätzlich zur Vorbehandlung zumindest der Fügeflächen mittels einer Lösung reinigungsaktiver Substanzen und/oder zur Oberflächenvorbehandlung mit organischen Lösemitteln kann eine mechanische, insbesondere abrasive Oberflächenvorbehandlung zumindest der späteren Fügeflächen erfolgen.

Ein Möglichkeit dazu ist ein Bürsten, Reiben, Schleifen, Läppen oder Polieren zumindest des Fügebereiches wenigstens eines der Fügepartner. Besonders bewährt hat sich bei Versuchen der Anmelderin ein Bürsten mittels eines Vlieses aus synthetischen Nylon®-Fasern, auf welche phenolharzgebundenes Aluminiumoxid Al₂O₃ aufgebracht ist. Derartige Bürsten sind unter der Bezeichnung Scotch-Brite® von der Firma 3M im Handel. Wegen der federnden Lagerung der Aluminiumoxid-Schleifkörner auf den Nylon®-Fasern sind dabei die erzielten Rauhtiefen im Vergleich z. B. zum Schleifen der Fügeoberflächen wesentlich geringer. Die zu behandelnde Magnesiumoberfläche wird vor dem Fügen gründlich, aber besonders schonend gereinigt und aufgerauht, so daß mit diesem Verfahren auch dünne Teile ohne Geometrieveränderungen der Fügeoberflächen und ohne allzu starke Erhöhungen der Rauhigkeit der Fügeoberflächen bearbeitet werden können. Durch Variationen der verwendeten Bürsten können unterschiedliche Rauhtiefen leicht eingestellt werden. Durch den Eintrag von Bestandteilen der Kunstharzbindung in die vorzubehandelnde Magnesiumoberfläche beim Bürsten wird zusätzlich eine klebetechnisch günstige Oberfläche erzeugt. Dieser Effekt kann noch besser ausgenutzt werden, indem man statt der herkömmlichen Phenolharzbindung der Schleifkörner auf den Fasern der kommerziell erhältlichen Scotch-Brite®-Bürsten Fasern verwendet, die ein dem später verwendeten Klebstoff entsprechendes oder ähnliches Kunstharz-System - z. B. auf Epoxidharz- oder Polyurethanbasis - zur Bindung der Schleifkörner tragen.

Alternativ oder zusätzlich zum Bürsten, Schleifen, Polieren, Reiben oder Läppen kann als ein anderes mechanisches abrasives Vorbehandlungsverfahren auch ein Partikelstrahlen zumindest im Bereich einer der späteren Fügeflächen vorgenommen werden. Bewährt hat sich bei Versuchen der Anmelderin ein Druckluftstrahlen mit Edelkorund (GBEK) als Strahlmittel. Das als Strahlmittel nach DIN 8201 spezifizierte Edelkorund besteht überwiegend aus Aluminiumoxid-Körnchen (Al₂O₃). Durch Beeinflussung der Strahlparameter, wie verwendeter Strahlluftdruck, Strahlwinkel, Strahlabstand, Zusammensetzung des Strahlmittels, Kornform und Korngröße des Strahlmittels usw. kann das Strahlverfahren leicht auf die vorliegenden Magnesiumwerkstoff-Fügepartner und die gewünschte Strahlergebnisse eingestellt werden.

Alternativ oder zusätzlich zu den bisher beschriebenen Oberflächenvorbehandlungsverfahren der Magnesiumwerkstoff-Fügepartner kann zumindest im späteren Fügebereich auch eine chemische Aktivierungsvorbehandlung durchgeführt werden.

Besonders bewährt hat sich dabei in Versuchen der Anmelderin ein Anodisieren der Fügepartner zumindest im Fügebereich. Unter Anodisieren wird ein Verfahren verstanden, bei dem durch Anlegen einer Spannung an dem vorzubehandelnden Fügeteil eine neue Oberflächenschicht auf dem Fügeteil bzw. zumindest auf dessen Fügebereich gebildet wird. Diese Schichten werden in wässrigen Elektrolytlösungen unter Zuhilfenahme einer äußeren Stromquelle erzeugt, wobei das Werkstück als Anode geschaltet ist. Dadurch wird der Grundwerkstoff umgewandelt und ist durch die Reaktion seiner Metallwerkstoffionen mit dem Elektrolytpartner am Schichtaufbau beteiligt. Durch das Anodisieren kann die Adhäsion zwischen Fügeoberfläche und Klebmittel verbessert und die Korrosionsneigung des Metallwerkstoffes vermindert werden.

Bei Versuchen der Anmelderin haben sich als Anodisiermittel 8-Hydroxychinolin-Lösungen und/oder 8-Hydroxychinolinderivat-Lösungen, welche einen Spacer zum polymeren Klebstoff bzw. Lack beinhalten, und/oder Natronlaugelösungen NaOH/L und/oder Phosphorsäurelösungen H₃PO₄/L und/oder Schwefelsäurelösungen H₂SO₄/L bewährt.

Alternativ oder zusätzlich kann als anderes chemisches Aktivierungsvorbehandlungsverfahren auch das Aufbringen einer Lösung eines Phosphonsäurederivats als Haftvermittler auf mindestens eine der miteinander zu verbindenden Fügeoberflächen durchgeführt werden.

Als weiteres chemisches Oberflächenaktivierungs-Vorbehandlungsverfahren kommt eine Fluorzirkonat-Vorbehandlung in Frage. Fluorzirkonat-Vorbehandlungen sind für andere Werkstoffe, insbesondere Stähle, bereits bekannt.

Alternativ oder zusätzlich kommt als weiteres chemisches Oberflächenvorbehandlungs-Aktivierungsverfahren auch ein Chromatieren zumindest der Fügefläche zumindest eines der Fügepartner aus einem Magnesiumwerkstoff in Frage. Auch das Chromatieren ist für Stahlwerkstoffe bereits bekannt.

Alle diese Oberflächen-Vorbehandlungsverfahren können jeweils allein oder in Kombination miteinander eingesetzt werden. Für alle in Lösung stattfindenden Oberflächen-Vorbehandlungsverfahren bietet sich unterstützend eine gleichzeitig oder alternierend erfolgende Ultraschallbehandlung an.

Durch die geschilderten Oberflächenvorbehandlungsverfahren werden im wesentlichen folgende Ziele verfolgt: die Oberfläche soll insbesondere gegenüber Polymeren (z. B. Klebemitteln und Lacken) aktiviert werden. (Dies beinhaltet z. B. die Entfernung von Ölen, Fetten und Staub sowie die Entfernung bereits vorhandener Oxidschichten auf korrodierten Magnesiumoberflächen.) Die Kontaktkorrosion soll verringert bzw. vermieden werden. Auf den Oberflächen zumindest des Fügebereichs erzeugte Oberflächenschichten sowie ggf. verwendete Klebstoffe sollen umformbar, insbesondere tiefziehfähig, temperaturstabil auch im Temperaturbereich von Lackier- und/oder KTL-Tauchbädern (d. h. bis zu etwa 200 °C), gut haftfähig und lagerfähig auch bei Bewetterung sein.

Bei den verwendeten Fügepartnern, deren Oberfläche zumindest im Fügebereich aus einem Magnesiumwerkstoff besteht, worunter sowohl Magnesium als auch Magnesiumlegierungen verstanden werden, kann es sich beispielsweise um Gußteile, insbesondere Druckgußteile, aber auch um Blechteile, insbesondere gewalzte Blechteile, oder um Preßteile, insbesondere Strangpreßteile, oder auch um sogenannte Compoundteile handeln. Die Fügeverfahren werden vorteilhaft im Fahrzeugbau, insbesondere im Kraftfahrzeug-Karosseriebau eingesetzt. Z. B. können die geschilderten Verfahren zum Fügen einer Fahrzeugsäule oder Fahrzeugsäulenkomponente mit einem Fahrzeugschweller oder einer Fahrzeugschwellerkomponente, mit einem Fahrzeuglängsträger oder einer Fahrzeuglängsträgerkomponente oder mit einem Fahrzeugdach oder einer Fahrzeugdachkomponente dienen. Sie können auch beispielsweise zum Fügen eines innenliegenden Fahrzeug-Seitenteils oder einer innenliegenden Fahrzeug-Seitenteilkomponente mit einem außenliegenden Fahrzeug-Seitenteil bzw. einer außenliegenden Fahrzeug-Seitenteilkomponente dienen.

Die Erfindung wird im folgenden anhand mehrerer Ausführungsbeispiele geschildert, die unter Hinweis auf die beigefügten Zeichnungen näher erläutert werden.

In den beigefügten Zeichnungen zeigen:
- Figur 1:: eine Draufsicht auf eine Überlapp-Fügeverbindung zweier Fügepartner (im Ausbruch) aus einem Magnesiumwerkstoff, wobei eine kombinierte Niet-Klebe-Verbindung dargestellt ist;
- Figur 2: ein Querschnitt entlang der Linie I-I der Figur 1 durch die Fügeverbindung der Figur 1.

Die Fügeuntersuchungen bei der Anmelderin wurden vorzugsweise an plattenförmigen Proben aus Magnesiumwerkstoffen mit einer Dicke von 1,5 bis 2,5 mm durchgeführt. Überwiegend wurde die standardisierte, kommerziell erhältliche Magnesium-Druckgußlegierung AM 50 (MgAl5Mn) verwendet. Die Zusammensetzung der Magnesiumlegierung beträgt nach Herstellerangaben 4,50 bis 5,30 % Aluminium Al, 0,28 bis 0,50 % Mangan Mn, ≤ 0,20 % Zink Zn, ≤ 0,05 % Silizium Si, ≤ 0,08 % Kupfer Cu, ≤ 0,001 % Nickel Ni, ≤ 0,004 % Eisen und ≤ 0,01 % andere Bestandteile je chemischen Element; der Rest ist Magnesium Mg. Daneben wurden auch die kommerziell erhältlichen, standardisierten Magnesiumlegierungen AM 60, AZ 91 und AZ 31 verwendet.

Die Probeplatten wurden zunächst überwiegend einer Entfettung in einem Aceton-Bad bei Raumtemperatur unterworfen, wobei gleichzeitig Ultraschall (Frequenz 20 bis 40 kHz) zur Erhöhung der Reinigungswirkung des Acetonbades eingesetzt wurde.

Ein Teil der Probekörper wurde anschließend einer mechanischen abrasiven Oberflächenvorbehandlung der Fügezonen durch Bürsten mittels handelsüblicher Scotch-Brite®-Bürsten unterzogen. Die verwendeten Bürsten bestehen aus einem Vlies von Nylon®-Fasern, auf welche mittels eines Phenolharzes gebundenes Aluminiumoxid Al₂O₃ aufgebracht ist. Das Scotch-Brite®-Bürsten diente dem Abtrag dünner Oxidschichten (typischerweise maximal 100 µm Dicke) bei annähernd konstanter Rauhigkeit der Bearbeitungsoberfläche.

Ein anderer Teil der Probekörper wurde mittels Edelkorund-Körnern in einer Trockenstrahlanlage druckluftgestrahlt. Das als Strahlmittel eingesetzte Edelkorund bestand zu mehr als 95 % aus Aluminiumoxid(Al₂O₃)-Körnern, hatte eine durchschnittliche Mohshärte von 9, eine kantige Kornform und eine Körnung von 0,12 bis 1,5mm. Der Strahldruck betrug 8 bar, der Abstand 10 cm und der Strahlwinkel 90 °. Anschließend wurden die Probenplatten mit Druckluft abgeblasen und nochmals einer Aceton-Tauchbadentfettung im Ultraschallbad unterzogen, um lose haftende Strahlmittelrückstände auf den Fügeteiloberflächen zu entfernen.

Ein Teil der Probeplatten wurde einer chemischen Aktivierungs-Vorbehandlung mittels eines Phosphonsäurederivats unterzogen, das die Fähigkeit besitzt, aufgrund vorliegender Hydroxidgruppen mit Magnesium stabile Chelatkomplexe zu bilden und dadurch als Haftvermittler dienen kann. Von dem Phosphonsäurederivat wurde eine 0,5-gewichtsprozentige wässrige Lösung mit einem pH-Wert gleich 3 hergestellt. Die vorher mit Aceton im Ultraschallbad entfetteten Magnesiumproben wurden dann 10 Minuten lang in die Lösung getaucht, anschließend mit Wasser abgespült und getrocknet.

Andere Proben wurden einer chemischen Vorbehandlung durch Anodisieren unterzogen. Dazu wurden die Proben zunächst im Aceton-Ultraschallbad entfettet und anschließend einer alkalischen Reinigung in einer alkalischen wässrigen Lösung aus 50 Gramm pro Liter Natriumhydroxid NaOH und 10 Gramm pro Liter Trinatriumorthophosphatdodecahydrat unterzogen. Die anschließend mit Wasser abgespülten Proben wurden danach jeweils 15 Minuten lang bei einem Anodisierstrom von 12 mA/cm² in das jeweilige Anodisierbad eingelegt. Als Kathode diente jeweils eine Edelstahl-Kathode.

Eines der verwendeten Anodisierbäder setzte sich aus einer wässrigen Lösung aus 25 Gramm pro Liter Kaliumdichromat K₂Cr₂O₇ und 25 Gramm pro Liter Ammoniumsulfat (NH₄)₂SO₄ zusammen. Andere Anodisierbäder enthielten wässrige Lösungen von Natronlauge NaOH/L, von Phosphorsäure H₃PO₄/L, von Schwefelsäure H₂SO₄/L, von 8-Hydroxychinolin sowie einem 8-Hydroxychinolinderivat, das einen Spacer zum polymeren Klebstoff bzw. Lack beinhaltete.

Im Anschluß an die Behandlung im Anodisierbad wurden die Proben jeweils mit Wasser abgespült und getrocknet.

Andere Magnesiumproben wurden einer Fluorzirkonatbehandlung im Fügebereich unterworfen. Beim Fluorzirkonatverfahren handelt es sich um ein Beschichtungsverfahren der Firma Chemetall mittels eines NP-Bonders (verwendet wurde der NP-Bonder C4740). Dieses chromfreie Behandlungsprodukt bildet eine Konversionsschicht, die die Haftung und Unterwanderungsbeständigkeit von Lacken (speziell von Pulverlacken) verbessert.

Andere Probenkörper wurden einer Chromatierung unterworfen. Als Chromatierverfahren wurde das NH 35-Verfahren der Firma Norsk Hydro verwendet. Das NH 35-Verfahren ergibt eine gute Passivierung gegen Korrosion sowie eine gute Haftvermittlung zu organischen Überzügen (z. B. Klebstoffen und Lacken). Der Behandlungsprozeß wurde wie folgt durchgeführt: zunächst wurden die Probekörper in einem organischen Lösemittelbad und/oder in einem wässrigen alkalischen Bad, ggf. unter Ultraschallunterstützung, gereinigt. Anschließend wurde - sofern alkalische Reinigungsbäder verwendet wurden - eine Spülung mit Wasser vorgenommen und daraufhin 20 bis 30 Sekunden lang das Chromatierungsverfahren durchgeführt. Abschließend wurden die Probekörper wiederum mit Wasser abgespült und getrocknet.

Die derart vorbehandelten Fügeteile wurden sodann mittels verschiedener Klebstoffe bei Raumtemperatur zusammengeklebt.

Als ein Klebstoff wurde ein heißhärtender einkomponentiger Epoxidkleber auf Basis von Bisphenol-A und Bisphenol-F verwendet. Epoxidkleber dieses Typs werden unter der Bezeichnung XW 1185 und unter der Bezeichnung XD 4600 von der Firma Ciba-Geigy, Basel kommerziell angeboten. Der Epoxidkleber kann z. B. in KTL-Tauchbädem der Automobilindustrie ausgehärtet werden.

Als ein anderer Kleber wurde ein einkomponentiger Polyurethan-Klebstoff verwendet, der unter der Bezeichnung Tivo 9551/43 von der Firma Tivoli, Hamburg kommerziell angeboten wird.

Die Klebeversuche wurden teils unmittelbar nach den geschilderten Oberflächenvorbehandlungsverfahren, teilweise auch nach mehrstündigem bzw. mehrtägigem Abwarten - teilweise unter Außenbewetterung - durchgeführt.

Bei einem Teil der hergestellten Klebeverbindungen wurde zusätzlich eine Verbindung mittels Stanz-Vollnieten, Stanz-Halbhohlnieten, Blindnieten und/oder gewindeschneidender Schrauben durchgeführt. Die verwendeten Nieten bzw. Schrauben bestanden entweder aus einer besonders kupfer- und eisenarmen Aluminiumlegierung, oder aus mit einer ALMAC-Zink-Beschichtung versehenem Stahl. Derartige ALMAC-Zink-Beschichtungen sind in H. Kaesche, Die Korrosion der Metalle, Springer-Verlag 1990 näher geschildert.

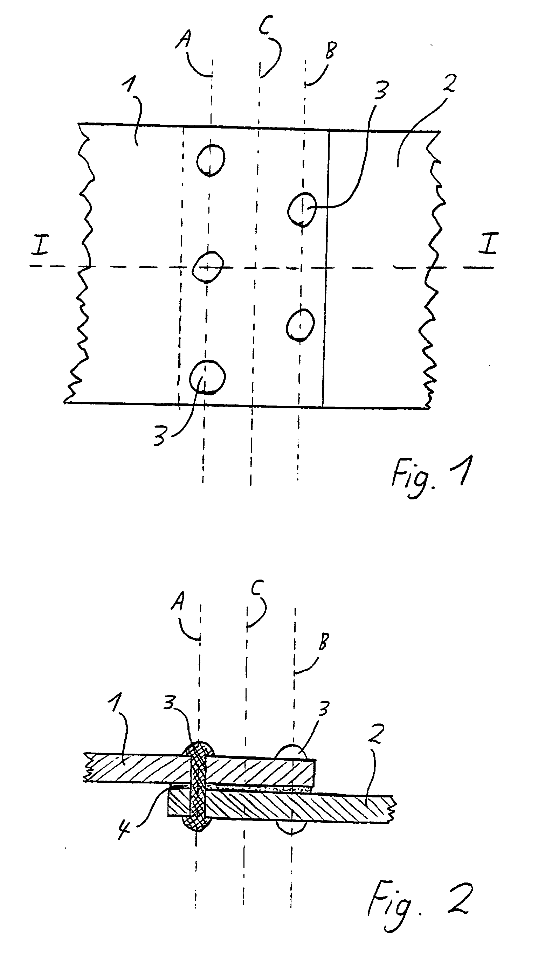

Besonders bewährt hat sich, die Durchsetzfügepunkte, Nieten 3 und/oder Schrauben nicht in der Mitte des Klebemittelauftrags in der streifenförmigen Fügezone anzuordnen, sondern sie längsseitig in den Randbereichen der Klebemittelauftragszone anzubringen (vergl. Fig. 1 und Fig. 2). Hinsichtlich des Klebeanteils einer Niet-Klebe-Verbindung bzw. Durchsetzfüge-Klebe-Verbindung bzw. Schraub-Klebe-Verbindung der beiden Magnesiumwerkstoff-Fügepartner 1, 2 ist nämlich die Festigkeit der Klebeverbindung mittels des Klebemittels 4 im mittleren Bereich C der streifenförmigen Fügezone 5 optimal, während sie in den Randbereichen A, B der Fügezone 5 deutlich geringer ist. Ordnet man nun in diesen Randbereichen A, B der streifenförmigen Fügezone 5 die Nieten 3, Durchsetzfügestellen und/oder Schrauben an, so verleihen diese der kombinierten Niet-Klebe-Verbindung bzw. Durchsetzfüge-Klebe-Verbindung bzw. Schraub-Klebe-Verbindung genau in diesen durch den Klebstoff 4 nur schwächer verbundenen Randbereichen A, B eine hohe Verbundfestigkeit.

Bei mit dem Polyurethan-Klebstoff durchgeführten Niet-Klebe-Versuchen bildet das Nietelement das "Hauptfügeverfahren". Das (im Vergleich zu Epoxidharz-Klebstoffen) mit der niedrigeren Steifigkeit ausgestattete, gut verformbare Polyurethan wird vorwiegend als Dichtstoff, Korrosionsschutz und Dämpfungswerkstoff genutzt. Beim Einsatz der steiferen Epoxidkleber wirkt hingegen das Kleben als "Hauptfügeverfahren". Das Nieten dient hier als Fixierhilfe sowie als Entlastung bei bestimmten Arten mechanischer Belastung.

Bei den Versuchen der Anmelderin haben sich sowohl reine umformtechnische Fügeverfahren als auch reine Klebeverfahren zur Verbindung von wenigstens zwei Fügepartnern, deren Oberfläche zumindest im Fügebereich aus einem Magnesiumwerkstoff besteht, als geeignet erwiesen. Als besonders geeignet, da besonders fest, langzeitstabil und sicher erwiesen sich die jeweils kombinierten Umform-Klebe-Fügeverfahren.

## Patentansprüche

1. Verfahren zum Verbinden von wenigstens zwei Fügepartnern, die durch ein Klebefügeverfahren miteinander verbunden werden, wobei die Oberfläche der beiden Fügepartner (1, 2) zumindest im Fügebereich aus einem Magnesiumwerkstoff besteht, **dadurch gekennzeichnet, dass** die Fügepartner (1, 2) zusätzlich durch ein oder mehrere umformtechnische Fügeverfahren miteinander verbunden werden.

2. Verfahren nach Anspruch 1 , **dadurch gekennzeichnet, dass** als umformtechnisches Fügeverfahren Durchsetzfügen verwendet wird.

3. Verfahren nach einem der vorhergehenden Ansprüche, **dadurch gekennzeichnet, dass** als umformtechnisches Fügeverfahren Nieten verwendet wird.

4. Verfahren nach Anspruch 3, **dadurch gekennzeichnet, dass** zum Nieten ein Niet aus einem Stahlwerkstoff, insbesondere ein zinkbeschichtetes Stahlniet verwendet wird.

5. Verfahren nach Anspruch 3 oder 4, **dadurch gekennzeichnet, dass** zum Nieten ein Niet aus einem Aluminiumwerkstoff verwendet wird.

6. Verfahren nach Anspruch 5, **dadurch gekennzeichnet, dass** der Aluminiumwerkstoff Aluminium oder eine Aluminiumlegierung ist, die höchstens ein Gewichtsprozent Kupfer Cu und/oder Eisen Fe enthält.

7. Verfahren nach einem der Ansprüche 3 bis 6, **dadurch gekennzeichnet, dass** zum Nieten ein Stanzniet, insbesondere ein Stanz-Vollniet und/oder ein Stanz-Halbhohlniet verwendet wird.

8. Verfahren nach einem der Ansprüche 3 bis 7, **dadurch gekennzeichnet, dass** zum Nieten ein Blindniet verwendet wird.

9. Verfahren nach einem der vorhergehenden Ansprüche, **dadurch gekennzeichnet, dass** als umformtechnisches Fügeverfahren Verschrauben, insbesondere mittels gewindeschneidender Schrauben, verwendet wird.

10. Verfahren nach einem der Ansprüche 3 bis 9, **dadurch gekennzeichnet, dass** zwischen Niet bzw. Schraube und Magnesiumwerkstoff zur Verringerung oder Vermeidung von Korrosion ein Dichtstoff verwendet wird.

11. Verfahren nach einem der Ansprüche 2 bis 10, **dadurch gekennzeichnet, dass** Durchsetzfügepunkte bzw. Nieten (3) bzw. Schrauben in den Randbereichen der Klebemittelanordnung (4) angeordnet werden.

12. Verfahren nach Anspruch 11, **dadurch gekennzeichnet, dass** das Klebemittel (4) streifenförmig angeordnet wird und die Durchsetzfügepunkte bzw. die Nieten (3) bzw. die Schrauben längsseitig in den Randbereichen (A, B) des streifenförmigen Klebemittelauftrags (4) angeordnet sind.

13. Verfahren nach einem der Ansprüche 1 bis 12, **dadurch gekennzeichnet, dass** als Klebemittel ein Kleber auf Polyurethanbasis verwendet wird.

14. Verfahren nach einem der Ansprüche 1 bis 13, **dadurch gekennzeichnet, dass** als Klebemittel ein Kleber auf Epoxidharzbasis verwendet wird.

15. Verfahren nach einem der vorhergehenden Ansprüche, **dadurch gekennzeichnet, dass** wenigstens einer der Fügepartner, deren Oberfläche zumindest im Fügebereich aus einem Magnesiumwerkstoff besteht, vor dem Fügen zumindest im Fügebereich einer Vorbehandlung, insbesondere einer Reinigungsvorbehandlung und/oder einer Oberflächenaktivierungsvorbehandlung, unterzogen wird.

16. Verfahren nach Anspruch 15, **dadurch gekennzeichnet, dass** wenigstens einer der Fügepartner, deren Oberfläche zumindest im Fügebereich aus einem Magnesiumwerkstoff besteht, vor dem Fügen zumindest im Fügebereich einer Wärmevorbehandlung unterzogen wird.

17. Verfahren nach Anspruch 16, **dadurch gekennzeichnet, dass** die Wärmevorbehandlung bei etwa 150 bis 200 °C stattfindet.

18. Verfahren nach einem der Ansprüche 15 bis 17, **dadurch gekennzeichnet, dass** wenigstens einer der Fügepartner, deren Oberfläche zumindest im Fügebereich aus einem Magnesiumwerkstoff besteht, vor dem Fügen zumindest im Fügebereich mit einem flüssigen Reinigungsmittel gereinigt wird.

19. Verfahren nach Anspruch 18, **dadurch gekennzeichnet, dass** das flüssige Reinigungsmittel ein organisches Lösungsmittel und/oder ein alkalisches Reinigungsmittel und/oder eine Detergentien-/Tensidelösung ist.

20. Verfahren nach Anspruch 19, **dadurch gekennzeichnet, dass** das organische Lösemittel Aceton CH₃COCH₃ und/oder Methylethylketon CH₃COC₂H₅ ist.

21. Verfahren nach einem der Ansprüche 15 bis 20, **dadurch gekennzeichnet, dass** wenigstens einer der Fügepartner, deren Oberfläche zumindest im Fügebereich aus einem Magnesiumwerkstoff besteht, vor dem Fügen zumindest im Fügebereich einem mechanischen Reinigungsverfahren, insbesondere einem mechanischen abrasiven Reinigungsverfahren, unterzogen wird.

22. Verfahren nach Anspruch 21, **dadurch gekennzeichnet, dass** das mechanische Reinigungsverfahren ein Bürsten, Reiben, Läppen, Schleifen und/oder Polieren im Fügebereich umfaßt.

23. Verfahren nach Anspruch 22, **dadurch gekennzeichnet, dass** das Bürsten mittels Fasern geschieht, auf welche kunstharzgebundenes Aluminiumoxid Al₂O₃ aufgebracht ist.

24. Verfahren nach einem der Ansprüche 21 bis 23, **dadurch gekennzeichnet, dass** das mechanische abrasive Reinigungsverfahren Partikelstrahlen umfasst.

25. Verfahren nach Anspruch 24, **dadurch gekennzeichnet, dass** als Strahlmittel Edelkorund aus einem Druckluftstrahl verwendet wird.

26. Verfahren nach einem der Ansprüche 15 bis 25, **dadurch gekennzeichnet, dass** wenigstens einer der Fügepartner, deren Oberfläche zumindest im Fügebereich aus einem Magnesiumwerkstoff besteht, vor dem Fügen zumindest im Fügebereich einer chemischen Vorbehandlung unterzogen wird.

27. Verfahren nach einem der Ansprüche 15 bis 26, **dadurch gekennzeichnet, dass** vor dem Fügen zumindest auf den späteren Fügebereich wenigstens eines der Fügepartner, deren Oberfläche zumindest im Fügebereich aus einem Magnesiumwerkstoff besteht, ein Haftvermittler aufgebracht wird.

28. Verfahren nach Anspruch 27, **dadurch gekennzeichnet, dass** der Haftvermittler ein Phosphonsäurederivat ist.

29. Verfahren nach Anspruch 27 oder 28, **dadurch gekennzeichnet, dass** das Aufbringen des Haftvermittlers durch Anodisieren geschieht.

30. Verfahren nach Anspruch 29, **dadurch gekennzeichnet, dass** mit einer 8-Hydroxychinolin-Lösung und/oder mit einer 8-Hydroxychinolinderivat-Lösung, welche einen Spacer zum Polymer beinhaltet, und/oder mit einer Natronlauge-Lösung NaOH/L und/oder mit einer Phosphorsäure-Lösung H₃PO₄/L und/oder mit einer Schwefelsäure-Lösung H₂SO₄/L anodisiert wird.

31. Verfahren nach einem der Ansprüche 26 bis 30, **dadurch gekennzeichnet, dass** wenigstens einer der Fügepartner, deren Oberfläche zumindest im Fügebereich aus einem Magnesiumwerkstoff besteht, vor dem Fügen zumindest im Fügebereich einer Flourzirkonatvorbehandlung unterzogen wird.

32. Verfahren nach einem der Ansprüche 26 bis 31, **dadurch gekennzeichnet, dass** wenigstens einer der Fügepartner, deren Oberfläche zumindest im Fügebereich aus einem Magnesiumwerkstoff besteht, vor dem Fügen zumindest im Fügebereich einer Vorbehandlung durch Chromatieren unterzogen wird.

33. Verfahren nach einem der Ansprüche 15 bis 32, **dadurch gekennzeichnet, dass** die Reinigung bzw. Vorbehandlung vor dem Fügen zumindest des Fügebereiches wenigstens eines der Fügepartner, deren Oberfläche zumindest im Fügebereich aus einem Magnesiumwerkstoff besteht, durch eine Ultraschallbehandlung unterstützt wird.

34. Verfahren nach einem der vorhergehenden Ansprüche, **dadurch gekennzeichnet, dass** zumindest einer der wenigstens zwei Fügepartner, deren Oberfläche zumindest im Fügebereich aus einem Magnesiumwerkstoff besteht, ein Gussteil aus einem Magnesiumwerkstoff, insbesondere ein Druckgussteil ist.

35. Verfahren nach einem der vorhergehenden Ansprüche, **dadurch gekennzeichnet, dass** zumindest einer der wenigstens zwei Fügepartner, deren Oberfläche zumindest im Fügebereich aus einem Magnesiumwerkstoff besteht, ein Pressteil aus einem Magnesiumwerkstoff, insbesondere ein Strangpressteil ist.

36. Verfahren nach einem der vorhergehenden Ansprüche, **dadurch gekennzeichnet, dass** zumindest einer der wenigstens zwei Fügepartner, deren Oberfläche zumindest im Fügebereich aus einem Magnesiumwerkstoff besteht, ein Blechteil aus einem Magnesiumwerkstoff, insbesondere ein gewalztes Blechteil ist.

37. Verfahren nach einem der vorhergehenden Ansprüche, **dadurch gekennzeichnet, dass** das Verfahren im Fahrzeugbau, insbesondere im Kraftfahrzeug-Karosseriebau eingesetzt wird.

38. Verfahren nach Anspruch 37, **dadurch gekennzeichnet, dass** das Verfahren zum Fügen einer Fahrzeugsäule oder Fahrzeugsäulenkomponente mit einem Fahrzeugschweller oder einer Fahrzeugschwellerkoinponente dient.

39. Verfahren nach Anspruch 37, **dadurch gekennzeichnet, dass** das Verfahren zum Fügen einer Fahrzeugsäule oder Fahrzeugsäulenkomponente mit einem Fahrzeuglängsträger oder einer Fahrzeuglängsträgerkomponente dient.

40. Verfahren nach Anspruch 37, **dadurch gekennzeichnet, dass** das Verfahren zum Fügen einer Fahrzeugsäule oder Fahrzeugsäulenkomponente mit einem Fahrzeugdach oder einer Fahrzeugdachkomponente dient.

41. Verfahren nach Anspruch 37, **dadurch gekennzeichnet, dass** das Verfahren zum Fügen eines innenliegenden Fahrzeug-Seitenteils oder einer innenliegenden Fahrzeug-Seitenteilkomponente mit einem außenliegenden Fahrzeug-Seitenteil oder einer außenliegenden Fahrzeug-Seitenteilkomponente dient.

42. Verbundbauteil aus zwei oder mehr miteinander verbundenen Fügepartnern, wobei wenigstens zwei der Fügepartner zumindest im Fügebereich eine Oberfläche aus einem Magnesiumwerkstoff aufweisen, **dadurch gekennzeichnet, dass** zumindest die wenigstens zwei Fügepartner, deren Oberfläche zumindest im Fügebereich aus einem Magnesiumwerkstoff besteht, durch ein Verbindungsverfahren nach einem der Ansprüche 1 bis 41 miteinander verbunden sind.

43. Verbundbauteil nach Anspruch 42, **dadurch gekennzeichnet, dass** das Verbundbauteil Bestandteil eines Fahrzeugs, insbesondere einer Kraftfahrzeug-Karosserie ist.

## Claims

1. Method for connecting at least two joining partners which are connected to one another by a bonding joining process, the surface of the two joining partners (1, 2), at least in the joining region, consisting of a magnesium material, **characterized in that** the joining partners (1, 2) are additionally connected to one another by means of one or more deformational joining processes.

2. Method according to Claim 1, **characterized in that** the deformational joining process used is double-bend joining.

3. Method according to one of the preceding claims, **characterized in that** the deformational joining process used is riveting.

4. Method according to Claim 3, **characterized in that** a rivet made from a steel material, in particular a zinc-coated steel rivet, is used for the riveting.

5. Method according to Claim 3 or 4, **characterized in that** a rivet made from an aluminium material is used for the riveting.

6. Method according to Claim 5, **characterized in that** the aluminium material is aluminium or an aluminium alloy which contains at most 1% by weight of copper Cu and/or iron Fe.

7. Method according to one of Claims 3 to 6, **characterized in that** a self-piercing rivet, in particular a solid self-piercing rivet and/or a semi-hollow self-piercing rivet, is used for the riveting.

8. Method according to one of Claims 3 to 7, **characterized in that** a blind rivet is used for the riveting.

9. Method according to one of the preceding claims, **characterized in that** the deformational joining process used is screw connection, in particular by means of thread-tapping screws.

10. Method according to one of Claims 3 to 9, **characterized in that** a sealing material is used between rivet or screw and magnesium material in order to reduce or avoid corrosion.

11. Method according to one of Claims 2 to 10, **characterized in that** double-bend joining points or rivets (3) or screws are arranged in the edge regions of the arrangement of bonding agent (4).

12. Method according to Claim 11, **characterized in that** the bonding agent (4) is arranged in strip form, and the double-bend joining points or the rivets (3) or the screws are arranged on the longitudinal side in the edge regions (A, B) of the bonding agent (4) applied in strip form.

13. Method according to one of Claims 1 to 12, **characterized in that** the bonding agent used is a polyurethane-based adhesive.

14. Method according to one of Claims 1 to 13, **characterized in that** the bonding agent used is an adhesive based on epoxy resin.

15. Method according to one of the preceding claims, **characterized in that** at least one of the joining partners, the surface of which, at least in the joining region, consists of a magnesium material, is subjected to a pretreatment, in particular a cleaning pretreatment and/or a surface-activation pretreatment, at least in the joining region prior to the joining operation.

16. Method according to Claim 15, **characterized in that** at least one of the joining partners, the surface of which, at least in the joining region, consists of a magnesium material, is subject to a heat pretreatment at least in the joining region prior to the joining operation.

17. Method according to Claim 16, **characterized in that** the heat pretreatment takes place at approximately 150 to 200°C.

18. Method according to one of Claims 15 to 17, **characterized in that** at least one of the joining partners, the surface of which consists of a magnesium material at least in the joining region, is cleaned with a liquid cleaning agent at least in the joining region prior to the joining operation.

19. Method according to Claim 18, **characterized in that** the liquid cleaning agent is an organic solvent and/or an alkaline cleaning agent and/or a detergent/surfactant solution.

20. Method according to Claim 19, **characterized in that** the organic solvent is acetone CH₃COCH₃ and/or methyl ethyl ketone CH₃COC₂H₅.

21. Method according to one of Claims 15 to 20, **characterized in that** at least one of the joining partners, the surface of which consists of a magnesium material at least in the joining region, is subjected to a mechanical cleaning process, in particular an abrasive mechanical cleaning process, at least in the joining region prior to the joining operation.

22. Method according to Claim 21, **characterized in that** the mechanical cleaning process comprises brushing, rubbing, lapping, grinding and/or polishing in the joining region.

23. Method according to Claim 22, **characterized in that** the brushing is carried out by means of fibres to which resin-bonded aluminium oxide Al₂O₃ has been applied.

24. Method according to one of Claims 21 to 23, **characterized in that** the abrasive mechanical cleaning process comprises particle blasting.

25. Method according to Claim 24, **characterized in that** the blasting agent used is crystal corundum from a compressed-air jet.

26. Method according to one of Claims 15 to 25, **characterized in that** at least one of the joining partners, the surface of which consists of a magnesium material at least in the joining region, is subjected to a chemical pretreatment at least in the joining region prior to the joining operation.

27. Method according to one of Claims 15 to 26, **characterized in that** prior to the joining operation, an adhesion promoter is applied at least to what will subsequently be the joining region of at least one of the joining partners, the surface of which consists of a magnesium material at least in the joining region.

28. Method according to Claim 27, **characterized in that** the adhesion promoter is a phosphonic acid derivative.

29. Method according to Claim 27 or 28, **characterized in that** the adhesion promoter is applied by anodizing.

30. Method according to Claim 29, **characterized in that** anodizing is carried out using an 8-hydroxyquinoline solution and/or using an 8-hydroxyquinoline derivative solution which contains a spacer with respect to the polymer, and/or using an aqueous sodium hydroxide solution Na/OH/S and/or using a phosphoric acid solution H₃PO₄/S and/or using a sulphuric acid solution H₂SO₄/S.

31. Method according to one of Claims 26 to 30, **characterized in that** at least one of the joining partners, the surface of which consists of a magnesium material at least in the joining region, is subjected to a fluorozirconate pretreatment at least in the joining region prior to the joining operation.

32. Method according to one of Claims 26 to 31, **characterized in that** at least one of the joining partners, the surface of which consists of a magnesium material at least in the joining region, is subjected to a pretreatment by chromating at least in the joining region prior to the joining operation.

33. Method according to one of Claims 15 to 32, **characterized in that** the cleaning or pretreatment, prior to the joining operation, of at least the joining region of at least one of the joining partners, the surface of which consists of a magnesium material at least in the joining region, is assisted by an ultrasound treatment.

34. Method according to one of the preceding claims, **characterized in that** at least one of the at least two joining partners, the surface of which consists of a magnesium material at least in the joining region, is a casting made from a magnesium material, in particular a pressure die casting.

35. Method according to one of the preceding claims, **characterized in that** at least one of the at least two joining partners, the surface of which consists of a magnesium material at least in the joining region, is a pressed part made from a magnesium material, in particular an extruded part.

36. Method according to one of the preceding claims, **characterized in that** at least one of the at least two joining partners, the surface of which consists of a magnesium material at least in the joining region, is a sheet-metal part made from a magnesium material, in particular a rolled sheet-metal part.

37. Method according to one of the preceding claims, **characterized in that** the method is used in the automotive industry, in particular in the bodywork of a motor vehicle.

38. Method according to Claim 37, **characterized in that** the method is used to join a vehicle pillar or vehicle pillar component to a vehicle sill or a vehicle sill component.

39. Method according to Claim 37, **characterized in that** the method is used to join a vehicle pillar or vehicle pillar component to a vehicle side rail or a vehicle side rail component.

40. Method according to Claim 37, **characterized in that** the method is used to join a vehicle pillar or vehicle pillar component to a vehicle roof or a vehicle roof component.

41. Method according to Claim 37, **characterized in that** the method is used to join an inner vehicle side part or an inner vehicle side part component to an outer vehicle side part or an outer vehicle side part component.

42. Composite component comprising two or more joining partners which are connected to one another, at least two of the joining partners, at least in the joining region, having a surface made from a magnesium material, **characterized in that** at least the at least two joining partners, the surface of which consists of a magnesium material at least in the joining region, are connected to one another by means of a connecting method according to one of Claims 1 to 41.

43. Composite component according to Claim 42, **characterized in that** the composite component is part of a vehicle, in particular of a motor vehicle body.

## Revendications

1. Procédé pour la liaison d'au moins deux éléments à assembler, lesquels sont reliés entre eux au moyen d'un procédé d'assemblage par collage, la surface des deux éléments à assembler (1, 2) étant composée d'un matériau au magnésium au moins dans la zone d'assemblage, **caractérisé en ce que** les éléments à assembler (1, 2) sont en plus reliés entre eux au moyen d'un ou plusieurs procédés d'assemblage par mise en forme.

2. Procédé selon la revendication 1, **caractérisé en ce qu'**on utilise un procédé d'encastrement comme procédé d'assemblage par mise en forme.

3. Procédé selon l'une des revendications précédentes, **caractérisé en ce qu'**on utilise le rivetage comme procédé d'assemblage par mise en forme.

4. Procédé selon la revendication 3, **caractérisé en ce qu'**on utilise pour le rivetage un rivet fabriqué en un matériau d'acier, notamment un rivet en acier recouvert d'une couche de zinc.

5. Procédé selon la revendication 3 ou 4, **caractérisé en ce qu'**on utilise pour le rivetage un rivet fabriqué en un matériau d'aluminium.

6. Procédé selon la revendication 5, **caractérisé en ce que** le matériau d'aluminium est un aluminium ou un alliage d'aluminium qui contient au maximum 1% en poids de cuivre Cu et/ou de fer Fe.

7. Procédé selon l'une des revendications 3 à 6, **caractérisé en ce qu'**on utilise pour le rivetage un rivet à tige forée, notamment un rivet plein à tige forée et/ou un rivet semi-creux à tige forée.

8. Procédé selon l'une des revendications 3 à 7, **caractérisé en ce qu'**on utilise pour le rivetage un rivet aveugle.

9. Procédé selon l'une des revendications précédentes, **caractérisé en ce qu'**on utilise comme procédé d'assemblage par mise en forme le boulonnage, notamment au moyen de vis taraudeuses.

10. Procédé selon l'une des revendications 3 à 9, **caractérisé en ce qu'**on utilise un matériau d'étanchéité entre le rivet ou la vis et le matériau au magnésium de sorte à réduire ou éviter la corrosion.

11. Procédé selon l'une des revendications 2 à 10, **caractérisé en ce que** les points d'assemblage par encastrement ou les rivets (3) ou les vis sont disposés dans les zones périphériques de la zone avec adhésif (4).

12. Procédé selon la revendication 11, **caractérisé en ce que** l'adhésif (4) est disposé par bandes et que les points d'assemblage par encastrement ou les rivets (3) ou les vis sont agencés dans le sens de la longueur dans les zones périphériques (A, B) de la masse d'adhésif (4) en forme de bande.

13. Procédé selon l'une des revendications 1 à 12, **caractérisé en ce qu'**on utilise comme adhésif une colle à base de polyuréthane.

14. Procédé selon l'une des revendications 1 à 13, **caractérisé en ce qu'**on utilise comme adhésif une colle à base de résine époxy.

15. Procédé selon l'une des revendications précédentes, **caractérisé en ce qu'**au moins un des éléments à assembler dont la surface est composée d'un matériau au magnésium au moins dans la zone d'assemblage, est soumis à un traitement préalable avant l'assemblage, notamment un traitement de nettoyage préalable et/ou un traitement préalable favorisant la tensioactivité, ce au moins dans la zone d'assemblage.

16. Procédé selon la revendication 15, **caractérisé en ce qu'**au moins un des éléments à assembler dont la surface est composée d'un matériau au magnésium au moins dans la zone d'assemblage, est soumis à un traitement thermique préalable avant l'assemblage, ce au moins dans la zone d'assemblage.

17. Procédé selon la revendication 16, **caractérisé en ce que** le traitement thermique préalable est effectué entre environ 150 et 200°C.

18. Procédé selon l'une des revendications 15 à 17, **caractérisé en ce qu'**au moins un des éléments à assembler dont la surface est composée d'un matériau au magnésium au moins dans la zone d'assemblage, est nettoyé avec un agent lavant liquide avant l'assemblage, ce au moins dans la zone d'assemblage.

19. Procédé selon la revendication 18, **caractérisé en ce que** l'agent lavant liquide est un solvant organique et/ou un agent lavant alcalin et/ou une solution de détergents et de tensioactifs.

20. Procédé selon la revendication 19, **caractérisé en ce que** le solvant organique est de l'acétone CH₃COCH₃ et/ou de la méthyléthylcétone CH₃COC₂H₅.

21. Procédé selon l'une des revendications 15 à 20, **caractérisé en ce qu'**au moins un des éléments à assembler dont la surface est composée d'un matériau au magnésium au moins dans la zone d'assemblage, est soumis à un processus de nettoyage mécanique avant l'assemblage, notamment un processus de nettoyage mécanique abrasif, ce au moins dans la zone d'assemblage.

22. Procédé selon la revendication 21, **caractérisé en ce que** le processus de nettoyage mécanique comprend un brossage, un frottage, un rodage, un meulage et/ou un polissage dans la zone d'assemblage.

23. Procédé selon la revendication 22, **caractérisé en ce que** le brossage est effectué à l'aide de fibres recouvertes d'alumine Al₂O₃ liée à la résine synthétique.

24. Procédé selon l'une des revendications 21 à 23, **caractérisé en ce que** le processus de nettoyage mécanique abrasif comprend le décapage par jet de particules.

25. Procédé selon la revendication 24, **caractérisé en ce qu'**on utilise comme abrasif de décapage du corindon raffiné en jet sous air comprimé.

26. Procédé selon l'une des revendications 15 à 25, **caractérisé en ce qu'**au moins un des éléments à assembler dont la surface est composée d'un matériau au magnésium au moins dans la zone d'assemblage, est soumis à un traitement chimique préalable avant l'assemblage, ce au moins dans la zone d'assemblage.

27. Procédé selon l'une des revendications 15 à 26, **caractérisé en ce qu'**au moins sur la zone d'assemblage ultérieure d'au moins un des éléments à assembler dont la surface est composée d'un matériau au magnésium au moins dans la zone d'assemblage, on applique un agent d'accrochage avant l'assemblage.

28. Procédé selon la revendication 27, **caractérisé en ce que** l'agent d'accrochage est un dérivé de l'acide phosphonique.

29. Procédé selon la revendication 27 ou 28, **caractérisé en ce que** l'application de l'agent d'accrochage est effectuée par anodisation.

30. Procédé selon la revendication 29, **caractérisé en ce que** l'anodisation est effectuée en présence de 8-hydroxyquinoléine et/ou d'un dérivé de 8-hydroxyquinoléine dans une solution contenant un séparateur pour polymère, et/ou de soude caustique NaOH et/ou d'acide phosphorique H₃PO₄ et/ou d'acide sulfurique H₂SO₄ en solution.

31. Procédé selon l'une des revendications 26 à 30, **caractérisé en ce qu'**au moins un des éléments à assembler dont la surface est composée d'un matériau au magnésium au moins dans la zone d'assemblage, est soumis à un traitement préalable au fluorozirconate avant l'assemblage, ce au moins dans la zone d'assemblage.

32. Procédé selon l'une des revendications 26 à 31, **caractérisé en ce qu'**au moins un des éléments à assembler dont la surface est composée d'un matériau au magnésium au moins dans la zone d'assemblage, est soumis à un traitement préalable par chromatation avant l'assemblage, ce au moins dans la zone d'assemblage.

33. Procédé selon l'une des revendications 15 à 32, **caractérisé en ce que** le nettoyage ou le traitement préalable effectué avant l'assemblage sur au moins la zone d'assemblage d'au moins un des éléments à assembler dont la surface est composée d'un matériau au magnésium au moins dans la zone d'assemblage, est renforcé par un traitement aux ultrasons.

34. Procédé selon l'une des revendications précédentes, **caractérisé en ce qu'**au moins un des au moins deux éléments à assembler dont la surface est composée d'un matériau au magnésium au moins dans la zone d'assemblage est une pièce moulée en fonte réalisée dans un matériau au magnésium, notamment une pièce coulée sous pression.

35. Procédé selon l'une des revendications précédentes, **caractérisé en ce qu'**au moins un des au moins deux éléments à assembler dont la surface est composée d'un matériau au magnésium au moins dans la zone d'assemblage est une pièce fabriquée par pressage réalisée dans un matériau au magnésium, notamment une pièce filée à la presse.

36. Procédé selon l'une des revendications précédentes, **caractérisé en ce qu'**au moins un des au moins deux éléments à assembler dont la surface est composée d'un matériau au magnésium au moins dans la zone d'assemblage est une pièce de tôle réalisée dans un matériau au magnésium, notamment une pièce de tôle laminée.

37. Procédé selon l'une des revendications précédentes, **caractérisé en ce que** le procédé est mis en oeuvre pour la construction automobile, notamment pour la fabrication de carrosseries pour véhicules à moteur.

38. Procédé selon la revendication 37, **caractérisé en ce qu'**il sert à l'assemblage d'un pied-droit de véhicule ou d'un élément pour pied-droit de véhicule avec un seuil de porte de véhicule ou un élément de seuil de porte de véhicule.

39. Procédé selon la revendication 37, **caractérisé en ce qu'**il sert à l'assemblage d'un pied-droit de véhicule ou d'un élément pour pied-droit de véhicule avec un longeron de véhicule ou un élément de longeron de véhicule.

40. Procédé selon la revendication 37, **caractérisé en ce qu'**il sert à l'assemblage d'un pied-droit de véhicule ou d'un élément pour pied-droit de véhicule avec un toit pour véhicule ou un élément de toit pour véhicule.

41. Procédé selon la revendication 37, **caractérisé en ce qu'**il sert à l'assemblage d'une partie latérale intérieure d'un véhicule ou d'un élément d'une partie latérale intérieure d'un véhicule avec une partie latérale extérieure d'un véhicule ou un élément d'une partie latérale extérieure d'un véhicule.

42. Elément de construction composite comprenant deux ou plusieurs éléments à assembler reliés entre eux, au moins deux des éléments à assembler présentant une surface réalisée dans un matériau au magnésium au moins dans la zone d'assemblage, **caractérisé en** qu'au moins les au moins deux éléments à assembler dont la surface est composée d'un matériau au magnésium au moins dans la zone d'assemblage sont reliés entre eux par l'intermédiaire d'un procédé de liaison selon l'une des revendications 1 à 41.

43. Elément de construction composite selon la revendication 42, **caractérisé en ce qu'**il fait partie intégrante d'un véhicule, notamment de la carrosserie d'un véhicule à moteur.
